# EUROPÄISCHE PATENTSCHRIFT

(11) **EP 0 882 901 B1**
(45) Veröffentlichungstag und Bekanntmachung des Hinweises auf die Patenterteilung: **18.09.2002**
(21) Anmeldenummer: 98108237.3
(22) Anmeldetag: 06.05.1998
(51) Int. Cl.: F02F 7/00, F16C 9/02

(54) **Verfahren zum Herstellen einer Lageranordnung und danach hergestellte Lageranordnung**
Method of manufacturing a bearing assembly and bearing assembly manufactured according to it
Méthode d'assemblage d'un palier et palier obtenu

(30) Priorität: 04.06.1997 DE 19723380
(43) Veröffentlichungstag der Anmeldung: 09.12.1998
(73) Patentinhaber: Volkswagen Aktiengesellschaft, 38436 Wolfsburg (DE)
(72) Erfinder: Heinemann, Rolf, Dipl.-Ing., 38165 Lehre (DE)

(56) Entgegenhaltungen:
- EP-A- 0 696 688
- EP-B- 0 068 424
- EP-B- 0 104 535
- WO-A-97/42424
- CH-A- 381 015
- DE-A- 2 801 617
- DE-A- 3 426 208
- DE-A- 3 904 020
- DE-A- 19 511 285
- DE-C- 2 938 482
- US-A- 2 560 413
- US-A- 4 412 514

## Beschreibung

Die Erfindung betrifft eine Lageranordnungen gemäß dem Oberbegriff des Patentanspruches 1.

Bekannt sind bei gattungsgemäßen zweigeteilten Lageranordnungen formschlüssige Lagesicherungen für die Lagerhälften von Kurbelwellen-, Nockenwellen- und Pleuellagerungen unterschiedlicher Art, beispielsweise Paßstifte oder -bolzen - DE 195 11 285 A1, Fig. 4; 5 und 7 -, in Achsrichtung der Lager verlaufende Paßflächen unterschiedlicher Kontur - EP 0 068 424 B1; EP 0 104 535 B1; DE 29 38 482 C2; DE 195 11 285 A1, Fig. 2; 3 und 6 -, individuelle Bruchkonturen EP 0 696 688 A1.

Vorbekannt ist auch eine Herstellung von Pleuelstangen aus Sintermaterial - EP 0 696 688 A1 -, wobei einerseits zentrierende Paßflächen an beiden einzeln gefertigten Teilen vorgesehen sind oder andererseits nach einteiliger Herstellung individuelle Bruchkonturen durch gezieltes Brechen des Lagerganges erzeugt werden.

Allgemein ist es bekannt, zweiteilige Lager aus unterschiedlichen Materialien auszuführen, z.B. bei Kurbelwellenlagem in Verbrennungsmotoren. Der Zylinderblock aus Leichtmetall trägt eine der Lagerhälften, während die zugehörigen montierbaren Lagerschalen aus Grauguß hergestellt sind - siehe DE 34 26 208, Fig. 1, linke Hälfte. Mittels beidseitig der Lagerachse angeordneter Schrauben sind die aus unterschiedlichem Material hergestellten Lagerhälften kraftschlüssig verbunden.

Eine gattungsgemäße Lageranordnung mit einer formschlüssigen Lagesicherung in Form einer Zentrierung ist aus DE 28 01 617 A1 bekannt. Beidseitig der Lagerachse sind Verbindungsmittel zur festen Verbindung von zwei Lagerabschnitten angeordnet, wobei einer der Lagerabschnitte Kreissegmente trägt, welche mit konischen Flächen versehen zur Anlage an korrespondierende Flächen des anderen Lagerabschnittes unter elastischer Verpressung gelangen.

Aus der DE 39 04 020 A1 ist ein Verfahren zum Herstellen von Bauteilen mit geteiltem Lagerauge bekannt. Hierbei werden die das Lagerauge bildende Bauteile getrennt vorgepreßt, gesintert und anschließend unter Bildung des Lagerauges in eine Kalibrierform gelegt und nachgepreßt. Dadurch wird die Trennfuge zwischen den beiden Bauteilen formschlüssig ausgebildet.

Aus der US 2 560 413 ist femer ein zweiteiliges Lager mit dübelartigen Hülsen bekannt, welche Gewindebolzen im Bereich der Trennfuge umgreifen. Diese Hülsen sind aus verformbaren Material gefertigt und passen sich beim Festziehen der Gewindebolzen durch fließende Verformung in die Durchgangsbohrung für die Gewindebolzen ein.

Der Erfindung liegt die Aufgabe zugrunde, in einfacher Weise eine formschlüssige Zentrierung zwischen zwei getrennt hergestellten Lagerhälften von Lageranordnungen zu erzielen.

Diese Aufgabe wird erfindungsgemäß durch eine Lageranordnung der o.g. Art mit den In Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß zumindest einer der Lagerabschnitte in der Trennfläche mit Vorsprüngen versehen ist, wobei der entsprechend andere Lagerabschnitt im Bereich dieser Vorsprünge zumindest lokal eine geringere Werkstoffhärte als diese Vorsprünge derart aufweist, daß im montierten Zustand die Vorsprünge unter Bildung von bleibenden Einprägungen in den entsprechend anderen Lagerabschnitt eingreifen, wobei die Vorsprünge aus vereinzelten Segmenten gebildet sind, deren bezüglich der Trennfläche senkrechte Erstreckung größer bemessen ist als zwischen diesen Segmenten angeordnete Lücken.

Dies hat den Vorteil, daß eine formschlüssige Zentrierung zwischen den beiden Lagerabschnitten erzielt wird, ohne daß hierfür besondere Maßnahmen oder Bauteile notwendig wären. Ein seitliches Auswandem der Lagerabschnitte relativ zueinander entlang der Trennfläche ist durch den Formschluß vermieden. Dieses ist insbesondere bei hoch beanspruchten Lageranordnungen, wie etwa Kurbelwellenlagerung in hoch verdichtenden Verbrennungsmotoren, von erheblichem Vorteil.

Bevorzugt ist vorgesehen, daß der den oder die Vorsprünge tragende Lagerabschnitt insgesamt materialeinheitlich aus einem härteren Werkstoff gefertigt ist als der die nach der Montage vorhandenen Einprägungen tragende Lagerabschnitt. Dieses kann bei einem Verbrennungsmotor zur Lagerung einer Nockenwelle oder einer Kurbelwelle oder einer beliebigen anderen Welle bevorzugt dadurch erfolgen, daß ein Zylinderkopf oder ein Kurbelgehäuse aus einer Leichtmetalllegierung, insbesondere einer Aluminium- oder Magnesiumlegierung besteht, während zur Lagerung vorgesehene Lagerdeckel oder Lagerbrücken aus z. B. einem Sinterwerkstoff größerer Härte gefertigt sind.

Eine besonders einfache und effektive Zentrierung kann bevorzugt dadurch erzielt werden, daß die Vorsprünge im Bereich von die Verbindungsmittel aufnehmenden Öffnungen der Lagerabschnitte vorgesehen sind. Erfindungsgemäß sind die Vorsprünge dabei aus mehreren Segmenten gebildet, welche vorzugsweise kreisförmig um Durchgangsöffnungen für Verschraubungen der Lageranordnung angeordnet sind.

In Abhängigkeit der durch die plastische Verformung entstehenden Materialverdrängung ist es bevorzugt, daß der Lagerabschnitt geringerer Werkstoffhärte bereits vor der Montage im Bereich der später entstehenden Einprägungen mit vorgeformten Vertiefungen versehen ist. Hierdurch wird einerseits die zu verdrängende Materialmenge verringert, andererseits bietet eine solche Vertiefung Aufnahmevolumen für das verdrängte Material, ohne dabei die Trennfläche zu verformen.

In weiterer bevorzugter Ausgestaltung sind die Vorsprünge aus mehreren Segmenten unterschiedlicher Form und/oder Anzahl gebildet.

In einer vergleichsweise einfachen Ausbildung sind mehrere, vorzugsweise mit einer konischen Außenfläche versehene Segmente um eine Schraubendurchgangsöffnung gruppiert angeordnet.

Alternativ ist der Vorsprung im wesentlichen aus einem vorzugsweise mit einer konischen Außenfläche versehenen Kreisring gebildet, von dessen konischer Außenfläche ausgehend sich vereinzelte Segmente erstrecken.

Durch die Erfindung werden somit in einfacher Weise z. B. innerhalb eines Verbrennungsmotors unverwechselbare Einprägungen im Leichtmetall-Kurbelgehäuse für die Sitzfixierungen der zugehörigen Lagerdeckel oder -brücken aus einem härteren Material erzielt.

Durch eine unterschiedliche Anzahl oder Ausformung der Segmente innerhalb einer einzelnen Lageranordnung ist bei einer gegebenenfalls vorgenommenen Demontage eine eindeutige Lagezuordnung bei emeutem Zusammenfügen gegeben.

Weitere Vorteile und Merkmale der Erfindung ergeben sich aus den abhängigen Ansprüchen sowie aus der nachfolgend Beschreibung unter bezugnahme auf die Zeichnung. Dies zeigt in
- Fig. 1: eine erste Lagerhälfte, z.B. in einem Zylinderblock,
- Fig. 2: eine zweite Lagerhälfte, z.B. einen Lagerdeckel,
- Fig. 3: vergrößert eine Einzelheit A an der ersten Lagerhälfte gemäß Figur 1,
- Fig. 4: vergrößert eine Einzelheit an der zweiten Lagerhälfte,
- Fig. 5: eine Draufsicht auf die Lagerhälfte gemäß Fig. 4,
- Fig. 6: eine Einzelheit an der zweiten Lagerhälfte einer zweiten Ausführung,
- Fig. 7: eine Draufsicht auf die Ausführung gemäß Fig. 6 und
- Fig. 8: eine Draufsicht auf eine dritte bevorzugte Ausführung.

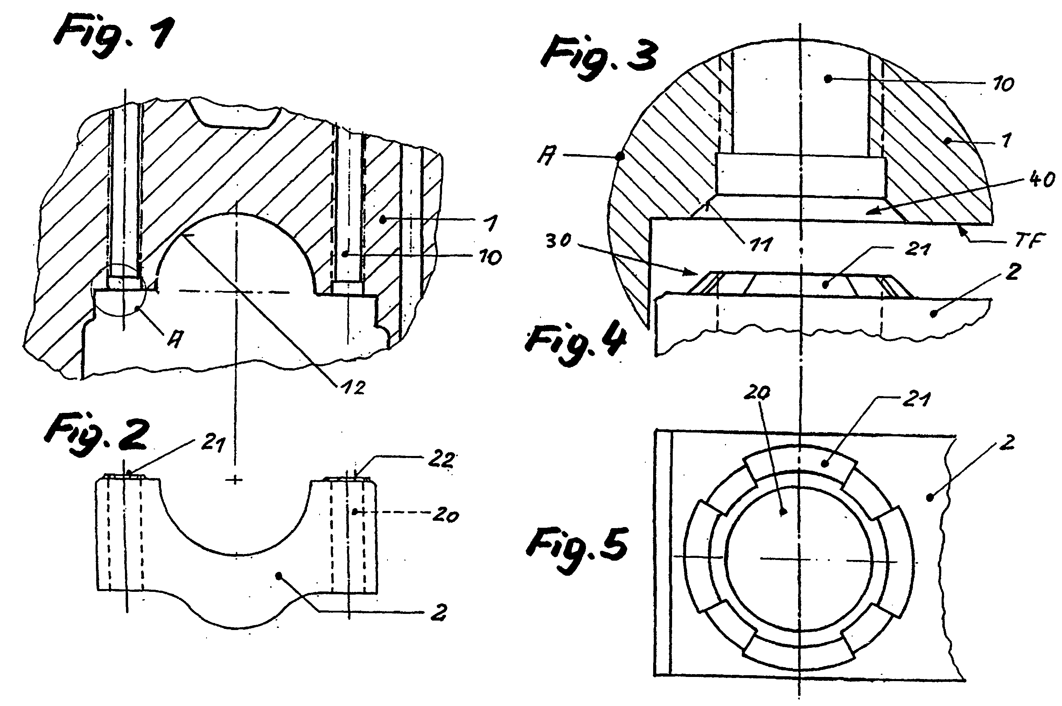

In Figur 1 ist ein erster Lagerabschnitt in Form einer ersten Lagerhälfte 1, z. B. in einem Leichtmetallzylinderblock eines Verbrennungsmotor als Ausschnitt gezeigt. Sie weist eine Lagerbohrung 12 und eine Gewindebohrung 10 zur Aufnahme von nicht dargestellten Befestigungsschrauben für die in Fig. 2 dargestellte zweite Lagerhälfte 2 auf. Anstelle der Gewindebohrung 10 kann auch ein Durchgang für eine Schraube vorhanden sein, sofern Schrauben und Muttern zur Verbindung der Lagerhälften 1; 2 dienen. Letztere ist als Lagerdeckel ausgeführt und mit in eine Öffnung 13 mündenden Durchgängen 20 für Befestigungsschrauben versehen. Sie ist aus härterem Werkstoff hergestellt als die erste Lagerhälfte 1 und weist die Öffnungen 13 umgebende Vorsprünge 30 in Form von konischen Segmenten 21, 22 auf.

Die weichere Lagerhälfte 1 weist, wie aus Fig. 3 ersichtlich, im Bereich der Gewindebohrung 10 eine Vertiefung 40 in Form einer konisch vorgeformten Rille 11 bzw. einer hohlen Gegenkontur geringerer Abmessung als die unter Krafteinwirkung einzudrückenden Segmente 21; 22; 23 auf.

Zum Herstellen von unverwechselbaren Einprägungen in der ersten Lagerhälfte 1 für die Sitzfixierung der jeweils zugehörigen zweiten Lagerhälfte 2 wird diese Lagerhälfte 2 vor einer Bearbeitung der Lagerbohrung 12 bei der Erstmontage in die weichere Lagerhälfte 1 im Bereich der Rille 11 geringerer Abmessung gepreßt. Es werden bleibende Einprägungen der Segmente 21; 22; 23 durch plastische Verformung unter Materialverdrängung erzeugt. In den Fig.3 und 4 sind jeweils die Einzelheiten an der ersten Lagerhälfte 1 und zweiten Lagerhälfte 2 an den Schraubendurchgängen im Bereich Trennfläche TF dargestellt. Die vorgeformte Rille 11 in der ersten Lagerhälfte 1 ist in ihrer Form so gestaltet, daß das beim Prägen durch Formänderung verdrängte Material nicht die Trennfläche TF verformt. Die zweite, härtere Lagerhälfte 2 mit der Öffnung 13 und dem konischen Segment 21 ist in Fig. 5 in einer Draufsicht gezeigt.

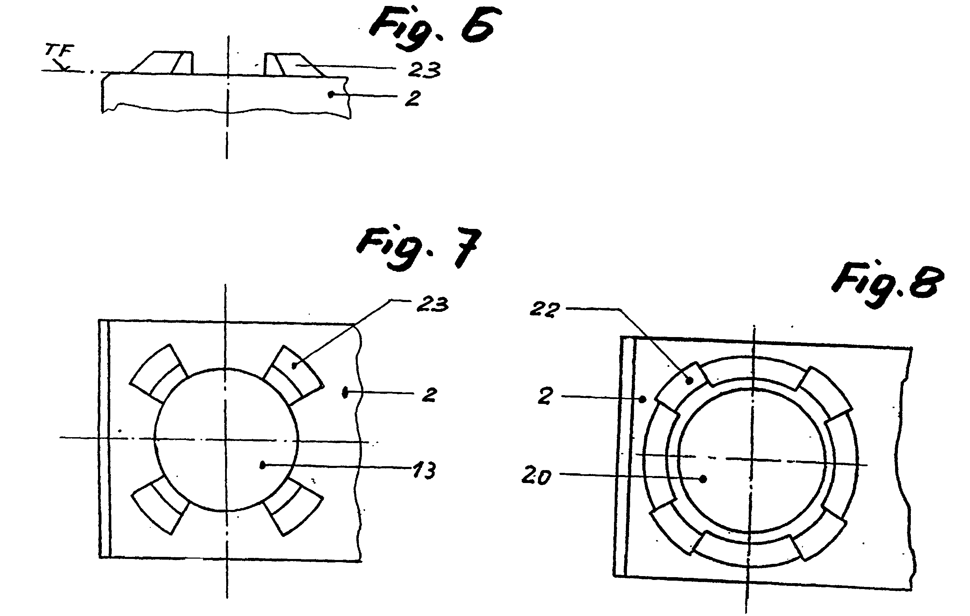

Vorteilhaft werden die Segmente 21; 22; 23 an den härteren Lagerhälften 2 mit jeweils unterschiedlicher Form und ggf. Anzahl ausgeführt, siehe Figuren 5 bis 8. Die Lagerhälften 2 jeweils eines Zylinderblocks sind vorzugsweise mit unterschiedlichen Kombinationen -21; 22 - 21; 23 - 22; 23 - der Segmente 21; 22; 23 versehen. Damit sind die zweiten Lagerhälften 2 nach der Erstmontage untereinander unverwechselbar den zugehörigen ersten Lagerhälften 1 zugeordnet sowie bei Einbau gegen eine versehentliche 180° Drehung gesichert.

Die zweite Lagerhälfte 2 ist vorzugsweise ein Sinterteil, das mit hoher Paßgenauigkeit und hoher Härte als vereinzelter Lagerdeckel oder als Lagerbrücke hergestellt ist.

## Patentansprüche

1. Lageranordnung, insbesondere für Verbrennungsmotoren, mit wenigstens einer Trennfläche (TF), einer formschlüssigen Lagesicherung von an die Trennfläche (TF) grenzenden Lagerabschnitten sowie zwei Lagerhälften (1, 2), welche mittels beidseitig einer Lagerachse angeordneten Verbindungsmitteln aneinander gehalten sind, **dadurch gekennzeichnet, daß** zumindest einer der Lagerabschnitte in der Trennfläche (TF) mit Vorsprüngen (30) versehen ist, wobei der entsprechend. andere Lagerabschnitt im Bereich dieser Vorsprünge (30) zumindest lokal eine geringere Werkstoffhärte als diese Vorsprünge (30) derart aufweist, daß im montierten Zustand die Vorsprünge (30) unter Bildung von bleibenden Einprägungen in den entsprechend anderen Lagerabschnitt eingreifen, wobei die Vorsprünge (30) aus vereinzelten Segmenten (21; 22; 23) gebildet sind, deren bezüglich der Trennfläche (TF) senkrechte Erstreckung größer bemessen ist als zwischen diesen Segmenten (21; 22; 23) angeordnete Lücken.

2. Anordnung nach Anspruch 1, **dadurch gekennzeichnet, daß** die Vorsprünge (30) im Bereich von die Verbindungsmittel aufnehmenden Öffnungen (13) angeordnet sind.

3. Anordnung nach Anspruch 1 oder 2, **dadurch gekennzeichnet, daß** der die Einprägungen aufweisende Lagerabschnitt materialeinheitlich aus dem die geringere Härte aufweisenden Werkstoff besteht.

4. Anordnung nach wenigstens einem der vorhergehenden Ansprüche, **dadurch gekennzeichnet, daß** der im montierten Zustand die Einprägungen aufweisende Lagerabschnitt vor der Montage mit den Vorsprüngen (30) gegenüberliegenden, sich von der Trennfläche (TF) aus erstreckenden, vorgeformten Vertiefungen (40) versehen ist.

5. Anordnung nach Anspruch 1, **dadurch gekennzeichnet, daß** die Vorsprünge (30) aus Segmenten (21; 22; 23) unterschiedlicher Form und/oder Anzahl gebildet sind.

6. Anordnung nach wenigstens einem der vorhergehenden Ansprüche, **dadurch gekennzeichnet, daß** der die Vorsprünge (30) tragende Lagerabschnitt als Sinterbauteil ausgebildet ist.

7. Anordnung nach Anspruch 6, **dadurch gekennzeichnet, daß** der die Einprägungen aufweisende Lagerabschnitt als Leichtmetallbauteil, insbesondere aus einer Aluminium- oder Magnesiumlegierung bestehend, ausgebildet ist.

8. Anordnung nach wenigstens einem der vorhergehenden Ansprüche, **dadurch gekennzeichnet, daß** der die Einprägungen aufweisende Lagerabschnitt als kurbelgehäuseseitige erste Lagerhälfte (1) in einem Verbrennungsmotor ausgebildet ist und der andere, mit größerer Werkstoffhärte versehene Lagerabschnitt als Lagerdeckel ausgebildet ist.

9. Anordnung nach Anspruch 8, **dadurch gekennzeichnet, daß** eine Mehrzahl von Lagerdeckeln einstückig und materialeinheitlich zu einer Lagerbrücke zusammengefaßt an einem Kurbelgehäuse angeordnet sind.

## Claims

1. Bearing arrangement, in particular for internal combustion engines, with at least one parting plane (TF), with positive securing in position of bearing portions contiguous to the parting plane, and with two bearing halves (1,2) which are held against one another by connection means arranged on both sides of a bearing axis, **characterized in that** at least one of the bearing portions is provided with projections (30) in the parting plane (TF), the correspondingly other bearing portion having a lower material hardness than these projections (30), at least locally, in the region of these projections (30), in such a way that, in the assembled state, the projections (30) engage into the correspondingly other bearing portion, so as to form permanent impressions, the projections (30) being formed from individual segments (21;22;23), of which the extent perpendicular to the parting plane (TF) has a larger dimension than that of gaps arranged between these segments (21;22;23).

2. Arrangement according to Claim 1, **characterized in that** the projections (30) are arranged in the region of orifices (13) receiving the connection means.

3. Arrangement according to Claim 1 or 2, **characterized in that** the bearing portion having the impressions consists of one material which has the lesser hardness.

4. Arrangement according to at least one of the preceding claims, **characterized in that** the bearing portion having the impressions in the assembled state is provided, prior to assembly, with preformed depressions (40) located opposite the projections (30) and extending from the parting plane (TF).

5. Arrangement according to Claim 1, **characterized in that** the projections (30) are formed from segments (21; 22; 23) of different shape and/or number.

6. Arrangement according to at least one of the preceding claims, **characterized in that** the bearing portion carrying the projections (30) is designed as a sintered component.

7. Arrangement according to Claim 6, **characterized in that** the bearing portion having the impressions is designed as a light metal component, in particular consisting of an aluminium or magnesium alloy.

8. Arrangement according to at least one of the preceding claims, **characterized in that** the bearing portion having the impressions is designed as a crankcase-side first bearing half (1) in an internal combustion engine and the other bearing portion having greater material hardness is designed as a bearing cover.

9. Arrangement according to Claim 8, **characterized in that** a plurality of bearing covers, combined in one piece and from one material to form a bearing bracket, are arranged on a crankcase.

## Revendications

1. Palier, en particulier pour des moteurs à combustion interne, avec au moins une face de séparation (TF), un calage de position à engagement positif de parties de palier jointives sur la face de séparation (TF) ainsi que deux moitiés de palier (1, 2), qui sont assemblées l'une à l'autre au moyen de moyens d'assemblage disposés de part et d'autre d'un axe de palier, **caractérisé en ce qu'**au moins une des parties de palier est pourvue de protubérances (30) dans la face de séparation (TF), dans lequel l'autre partie correspondante du palier présente au moins localement, dans la région de ces protubérances (30), une dureté de matière moins élevée que ces protubérances (30), de telle manière qu'en position montée, les protubérances (30) s'enfoncent dans l'autre partie correspondante du palier en formant des empreintes permanentes, les protubérances (30) étant formées de segments individuels (21; 22; 23), dont la dimension, mesurée perpendiculairement à la face de séparation (TF), est plus grande que les creux disposés entre ces segments (21; 22; 23).

2. Palier suivant la revendication 1, **caractérisé en ce que** les protubérances (30) sont disposées dans la région d'ouvertures (13) accueillant les moyens d'assemblage.

3. Palier suivant la revendication 1 ou 2, **caractérisé en ce que** la partie de palier présentant les empreintes se compose d'une matière identique à la matière présentant une dureté moins élevée.

4. Palier suivant au moins une des revendications précédentes, **caractérisé en ce que** la partie de palier présentant les empreintes en position montée est pourvue, avant le montage, d'évidements préformés (40), partant de la face de séparation (TF) et situés en face des protubérances (30).

5. Palier suivant la revendication 1, **caractérisé en ce que** les protubérances (30) sont formées de segments (21; 22; 23) de forme et/ou en nombre différents.

6. Palier suivant au moins une des revendications précédentes, **caractérisé en ce que** la partie de palier portant les protubérances (30) est constituée par une pièce frittée.

7. Palier suivant la revendication 6, **caractérisé en ce que** la partie de palier présentant les empreintes est constituée par une pièce en métal léger, composée en particulier d'un alliage d'aluminium ou de magnésium.

8. Palier suivant au moins une des revendications précédentes, **caractérisé en ce que** la partie de palier présentant les empreintes est constituée par une première moitié de palier (1), du côté du carter de vilebrequin, dans un moteur à combustion interne et l'autre partie de palier, dotée d'une dureté de matière plus élevée, est constituée par un chapeau de palier.

9. Palier suivant la revendication 8, **caractérisé en ce qu'**une pluralité de chapeaux de palier, réunis en un couvercle de palier d'une seule pièce et en une même matière, sont disposés sur un carter de vilebrequin.
